# FASCICULE DE BREVET EUROPEEN

(11) **EP 3 532 288 B1**
(45) Date de publication et mention de la délivrance du brevet: **29.12.2021**
(21) Numéro de dépôt: 17804226.3
(22) Date de dépôt: 24.10.2017
(51) Int. Cl.: B32B 17/10, B60J 1/00, B60J 1/17

(54) **VITRAGE FEUILLETE COULISSANT A DEBORD INTERIEUR**
SCHIEBEVERBUNDGLASSCHEIBE MIT INTERNEM ÜBERHANG
SLIDING LAMINATED GLAZING WITH INTERNAL OVERHANG

(30) Priorité: 28.10.2016 FR 1660487
(43) Date de publication de la demande: 04.09.2019
(73) Titulaire: SAINT-GOBAIN GLASS FRANCE, 92400 Courbevoie (FR)
(72) Inventeur: SAUVINET, Vincent, 38000 Grenoble (FR); JAMET, Vincent, 93300 Aubervilliers (FR)
(74) Mandataire: Saint-Gobain Recherche
(86) Numéro de dépôt international: PCT/FR2017/052937
(87) Numéro de publication internationale: WO 2018/078281

(56) Documents cités:
- EP-A1- 0 418 123
- EP-A2- 0 301 419
- WO-A1-2014/029605
- WO-A2-01/98613
- FR-A1- 2 525 677
- US-A1- 2002 020 117

## Description

La présente invention se rapporte à un vitrage de véhicule, et notamment de véhicule automobile, comportant une vitre ainsi que des moyens pour permettre la mobilité de ladite vitre en translation par rapport à une porte dudit véhicule, ladite vitre étant bombé et feuilleté et comprenant au moins une feuille de verre extérieure, une feuille de verre intérieure, ainsi qu'une feuille de matière plastique située entre ladite feuille de verre extérieure et ladite feuille de verre intérieure, chaque feuille présentant un chant périphérique.

Il est par exemple connu de la demande de brevet français N° FR 2 525 677 un agencement d'ouverture vitrée avec une vitre feuilletée dont la feuille de verre intérieure présente un débord intérieur par rapport au reste de la vitre feuilletée. Ce débord sert de moyen de guidage saillant qui est destiné à glisser dans un profilé en creux de la portière lors de la translation du vitrage, de telle sorte que la face extérieure du vitrage soit affleurant avec la structure de la portière lorsque le vitrage est fermé.

Il semble que cet agencement n'ait jamais été mis en œuvre industriellement.

Une explication plausible est que l'agencement selon ce document pose plus de problèmes qu'il n'en résout : pour une baie donnée, qui doit être fermée par un vitrage feuilleté coulissant, le fait de prévoir un débord pour ce vitrage feuilleté pose plus de problèmes que de prévoir un vitrage feuilleté de même épaisseur totale et sans débord pour cette même baie.

En effet, par rapport à un vitrage feuilleté sans débord, lorsqu'il est souhaité que le vitrage feuilleté présente un débord, pour la même baie, il faut prévoir :
- à la fois que la feuille de verre extérieure soit plus petite que le vitrage feuilleté sans débord, et
- à la fois que la feuille de verre intérieure soit plus grande que pour le vitrage feuilleté sans débord.

Il est nécessaire de faire ces deux opérations car sinon le vitrage feuilleté avec débord ne pourra pas être correctement maintenu en conservant les dimensions nominales de la baie :
- s'il est choisi de prévoir uniquement que la feuille de verre extérieure est plus petite que le vitrage feuilleté sans débord, alors il faut diminuer les dimensions de la baie, et
- s'il est choisi de prévoir uniquement que la feuille de verre intérieure est plus grande que pour le vitrage feuilleté sans débord, alors il faut augmenter les dimensions de la baie,
et chacune de ces deux opérations est à éviter car chacune impose de modifier l'apparence globale du véhicule.

Les deux opérations ci-dessus qui sont indispensables pour conserver une dimension de baie identique ne sont pas réalisées avec la même ampleur ; pour que le vitrage feuilleté soit correctement maintenu dans la baie sans modifier les dimensions de cette baie, ni les épaisseurs des constituants de la vitre feuilletée, il est nécessaire :
- que la feuille de verre extérieure soit seulement un petit peu plus petite que pour le vitrage feuilleté sans débord (avec par exemple une surface diminuée de 2 %), et
- que la feuille de verre intérieure soit franchement plus grande que pour le vitrage feuilleté sans débord (avec dans cet exemple une surface augmentée de 5 %).

En conséquence, la diminution de la dimension de la feuille de verre extérieure n'est pas compensée par l'augmentation de la dimension de la feuille de verre intérieure : comme la dimension de la feuille de verre intérieure est plus augmentée, en proportion, que la dimension de la feuille de verre extérieure n'est diminuée, au final, il faut plus de verre et le vitrage feuilleté avec débord s'en trouve alourdi.

Cette augmentation du poids du vitrage est néfaste parce qu'elle engendre une augmentation de la consommation du véhicule et parce qu'il faut alors concevoir des moyens de translation du vitrage plus résistants.

Il est connu par ailleurs de réaliser un agencement d'ouverture vitrée avec une vitre feuilletée avec des moyens pour permettre la mobilité de ladite vitre en translation par rapport à une porte dudit véhicule qui est sans montant haut, voire sans un montant latéral, voire sans aucun montant latéraux.

Dans ces agencements, en position fermée, le vitrage n'est que peu, voire pas du tout, retenu en haut et latéralement par la porte mais est retenu dans cette position par des moyens se situant directement sur la carrosserie, dans la partie de carrosserie adjacente à la porte lorsque la porte est fermée (partie appelée « baie de la carrosserie »).

L'art antérieur connaît à ce titre la demande de brevet européen N° EP 1 178 175 qui porte sur un système de positionnement et d'assemblage d'une vitre très complexe comportant :
- un élément adaptateur présentant une première extension dans le prolongement de la vitre et une seconde extension dans le sens longitudinal du vitrage ;
- un élément curseur guidé dans au moins un rail solidaire d'une porte du véhicule et entraîné par un dispositif d'entraînement logé dans ladite porte ; ledit curseur étant muni d'une troisième extension dans le sens longitudinal de la vitre, d'au moins un bloc de guidage solidaire d'un élément du dispositif d'entraînement et guidé le long d'un rail, ainsi que d'une paroi verticale comportant une première surface de contact verticale susceptible de coopérer avec l'une des faces de la première extension de l'élément adaptateur dont la deuxième extension coopère avec la troisième extension du curseur de façon à permettre un faible mouvement relatif entre l'adaptateur et le curseur sous l'action d'une force longitudinale appliquée au vitrage avant sa fixation ;
- un élément d'emprisonnement comprenant une surface de contact ; et
- un moyen de fixation coopérant avec l'élément d'emprisonnement de façon à bloquer la première extension de l'adaptateur entre lesdites premières et secondes surfaces de contact.

Ainsi, lors du montage du vitrage dans la portière, le réglage du vitrage est autorisé dans le sens vertical du véhicule par le déplacement de l'adaptateur entre le curseur et l'élément d'emprisonnement et dans le sens longitudinal grâce à l'action de la troisième extension du curseur sur la seconde extension de l'adaptateur.

Cette solution est fastidieuse à mettre en œuvre et engendre une perte de temps trop important pour le constructeur automobile qui cherche à ce que la voiture soit assemblée en un minimum de temps.

Il est par ailleurs connu de la demande internationale de brevet N° WO 01/98613, différentes solutions d'assemblage vitre/porte-vitre et porte-vitre/mécanisme d'entraînement.

Ce document révèle en particulier la possibilité, lorsque le porte-vitre est solidaire fixement à la vitre, de réaliser un ajustement de la géométrie du porte-vitre par enlèvement de matière, afin d'adapter la position relative du porte-vitre par rapport au mécanisme d'entraînement (curseur mobile).

Ce document révèle également la possibilité de rattraper les écarts de forme du vitrage par une modification du positionnement du porte-vitre par rapport à la vitre en utilisant un porte-vitre présentant un léger jeu dans la direction normale au vitrage. Le porte-vitre est ainsi fixé à la vitre à l'aide de deux colles, une colle lente et une colle rapide, après déplacement relatif de l'un par rapport à l'autre dans une position convenable.

Le but de l'invention est de proposer une structure de vitrage mobile en translation qui est à la fois légère, robuste, performante, facile à fabriquer et facile à mettre en œuvre.

D'une manière surprenante, il a été découvert qu'il était possible d'utiliser une vitre feuilletée avec une vitre intérieure fine, afin d'alléger le vitrage, d'opérer de préférence au préalable avant le feuilletage une trempe thermique ou un recuit thermique, ou une trempe chimique de cette feuille intérieure afin d'augmenter sa résistance mécanique, et de prévoir en outre au moins un débord intérieur avec une protection pour cette feuille de verre intérieure fine afin d'alléger encore plus la vitre, tout en permettant alors de réaliser un vitrage affleurant avec la porte, voire avec la carrosserie adjacente (cas de la porte sans montant).

La présente invention se rapporte ainsi dans son acception la plus large à un vitrage de véhicule selon la revendication 1 et les revendications dépendantes présentent des variantes avantageuses. Ce vitrage comporte une vitre ainsi que des moyens pour permettre la mobilité de ladite vitre en translation par rapport à une porte dudit véhicule qui est sans montant dans une partie supérieure, ladite vitre étant bombé et feuilleté et comprenant au moins une feuille de verre extérieure, une feuille de verre intérieure, ainsi qu'une feuille de matière plastique située entre ladite feuille de verre extérieure et ladite feuille de verre intérieure, chaque feuille présentant un chant périphérique, remarquable en ce que le chant de ladite feuille de verre intérieure est situé au-delà du chant de ladite feuille de matière plastique et du chant de ladite feuille de verre extérieure sur une partie au moins (c'est-à-dire sur au moins une partie/un bord, ou sur plusieurs parties/bords ou sur la totalité/périphérie) de la longueur du chant de ladite feuille de verre intérieure et en ce que le chant de ladite feuille de verre intérieure comporte en outre une couche de protection sur une partie au moins de la longueur du chant de ladite feuille de verre intérieure qui s'étend au-delà du chant de ladite feuille de matière plastique et du chant de ladite feuille de verre extérieure et de préférence le chant de ladite feuille de verre intérieure comporte une couche de protection sur la totalité de la longueur du chant de ladite feuille de verre intérieure qui est située au-delà du chant de ladite feuille de matière plastique et du chant de ladite feuille de verre extérieure. Ainsi, la couche de protection réalise à la fois une protection pour la feuille de verre intérieure située dessous et à la fois une protection pour la manipulation afin de diminuer le caractère tranchant de la fine feuille de verre intérieure.

Ladite feuille de verre intérieure présente une épaisseur comprise entre 0,40 et 2,10 mm, de préférence, entre 0,40 et 2,00 mm, voire entre 0,40 et 1,80 mm, voire entre 0,40 et 1,60 mm ; elle peut être notamment :
- une feuille de verre ayant subi une opération de trempe chimique, ou
- une feuille de verre ayant subi une opération de renforcement thermique par durcissement/recuit thermique ou par trempe thermique, ou
- une feuille de verre n'ayant subi ni opération de trempe chimique, ni opération de renforcement thermique.

La vitre est une vitre feuilletée dans le sens où il n'y a pas d'espace gazeux ou d'espace vide entre les feuilles qui constituent la vitre.

La feuille de verre intérieure présente une épaisseur qui n'est pas supérieure à celle de la feuille de verre extérieure ; elle est au plus égale, et de préférence inférieure, à celle de la feuille de verre extérieure.

Ladite couche de protection est une couche partielle dans le sens où elle n'est pas présente sur la totalité de la face extérieur ni de la face intérieure de la feuille de verre intérieure qui la porte ; lorsqu'elle est présente sur une partie d'une face extérieure et/ou intérieur de la feuille de verre intérieure, la couche de protection est présente sur une toute petite partie seulement de cette face (moins de 1/10^{e} de la surface de cette face), afin de ne pas diminuer de façon dommageable le clair de vue de la vitre.

Ladite feuille de verre intérieure peut présenter une épaisseur comprise 0,40 et 1,10 mm, voire entre 0,40 et 0,70 mm. Son épaisseur doit être suffisante pour participer positivement à la résistance mécanique et à la rigidité de la vitre mais ne doit pas être trop élevée pour ne pas trop augmenter le poids de la vitre. Ladite feuille de verre intérieure peut présenter par exemple une épaisseur de 0,40 mm, ou de 0,55 mm, ou de 0,70 mm, ou de 1,10 mm, ou de 1,60 mm.

Dans le présent document, pour les plages mentionnées les bornes des plages sont inclues dans les plages.

Le « chant », ou « rive » désigne le côté étroit d'une feuille, qui est située sensiblement transversalement entre les deux faces principales d'une feuille.

Le fait que le chant de ladite feuille de verre intérieure est situé au-delà à la fois du chant de ladite feuille de matière plastique et du chant de ladite feuille de verre extérieure le long d'au moins une partie de sa longueur permet de réaliser un débord de ladite feuille de verre intérieure par rapport à ladite feuille de matière plastique et ladite feuille de verre extérieure. Ce débord peut être périphérique dans le sens où il est présent tout autour de la périphérie de la vitre mais il peut aussi être partiel et n'être ainsi présent que le long d'une partie de la périphérie de la vitre ; il peut aussi être présent le long de plusieurs parties de la périphérie de la vitre ; il peut en particulier ne pas être présent le long du bord bas de la vitre.

Ce débord est prévu dans une partie visible du vitrage ; dans une partie qui est visible par les usagers du véhicule. Ce débord peut ne pas être présent dans une partie du vitrage qui reste cachée à l'intérieur de la carrosserie du véhicule, quel que soit l'état (ouvert, fermé, ou entre ouvert et fermé) du vitrage par rapport à l'élément de carrosserie qui le supporte).

La présente invention repose ainsi sur la découverte surprenante que dans un vitrage feuilleté mobile, la feuille de verre intérieure fine et trempée chimique pouvait être présente seule à un endroit de l'épaisseur du vitrage (à l'endroit du débord : sans feuille intercalaire de matière plastique, ni feuille de verre extérieure sur l'épaisseur du vitrage) et pouvait ainsi éventuellement être à cet endroit la seule partie du vitrage coopérant avec un montant de carrosserie (partie principale ou montant).

Dans un mode particulier de l'application de l'invention, la porte dudit véhicule est sans montant, au moins dans une partie supérieure.

Le chant de ladite feuille de verre intérieure comporte, de préférence, une couche de protection qui s'étend sur une distance contre une face extérieure de ladite feuille de verre intérieure et/ou contre une face intérieure de ladite feuille de verre intérieure, ladite distance étant comprise entre 2,0 et 30,0 mm, voire entre 3,0 et 20,0 mm et étant en outre de préférence constante en face extérieure de ladite feuille de verre intérieure et/ou constante en face intérieure de ladite feuille de verre intérieure, afin d'offrir une protection plus performante.

Le chant de ladite feuille de verre intérieure peut comporter une couche de protection qui s'étend sur une distance contre une face intérieure de ladite feuille de verre intérieure qui est supérieure à une distance de débord du chant de ladite feuille de verre intérieure par rapport au chant de ladite feuille de matière plastique et au chant de ladite feuille de verre extérieure afin d'offrir une protection plus performante ; Cette distance peut être comprise entre 3,0 et 40,0 mm, voire entre 4,0 et 30,0 mm, notamment lorsque ladite distance sur laquelle s'étend la couche de protection est comprise respectivement entre 2,0 et 30,0 mm, voire entre 3,0 et 20,0 mm.

Cette couche de protection peut notamment venir en contact avec le chant de ladite feuille de matière plastique, voire aussi avec le chant de ladite feuille de verre intérieure afin d'offrir une protection encore plus performante.

Ladite couche de protection est un vernis présentant une épaisseur de l'ordre de 0,1 à 3,0 mm, qui est facile à appliquer.

Cette pièce peut être préfabriquée puis coincée ou collée à la feuille de verre extérieure après la fabrication de la vitre (après le feuilletage) ; lorsqu'elle est en matière plastique, elle peut être fabriquée in-situ, par exemple par extrusion in situ ou encapsulation in situ. Une telle pièce rend le vitrage plus complexe mais peut permettre d'atteindre une protection plus performante.

De préférence, le chant de ladite feuille de verre intérieure s'étend au-delà du chant de ladite feuille de matière plastique et du chant de ladite feuille de verre extérieure au moins en partie haute dudit vitrage.

Dans une variante indépendante et avantageuse, le chant de ladite feuille de verre intérieure s'étend au-delà du chant de ladite feuille de matière plastique et du chant de ladite feuille de verre extérieure sur une partie seulement de la longueur du chant de ladite feuille de verre intérieure. Le chant de ladite feuille de verre intérieure peut s'étendre au-delà du chant de ladite feuille de matière plastique et du chant de ladite feuille de verre extérieure sur plusieurs parties de la longueur du chant de ladite feuille de verre intérieure mais dans cette variante indépendante le chant de ladite feuille de verre intérieure ne s'étend pas au-delà du chant de ladite feuille de matière plastique et du chant de ladite feuille de verre extérieure sur la totalité de la longueur du chant de ladite feuille de verre intérieure.

Ainsi, la vitre est plus facile à fabriquer car la (ou les) partie(s) du chant de ladite feuille de verre intérieure qui ne s'étend(ent) pas au-delà du chant de ladite feuille de matière plastique et du chant de ladite feuille de verre extérieure peut(peuvent) être telle(s) que le chant de ladite feuille de verre intérieure est alors dans la continuité du chant de ladite feuille de matière plastique et du chant de ladite feuille de verre extérieure ; cette(ces) partie(s) peut(peuvent) alors servir de partie(s) de référence pour le positionnement de la feuille de verre intérieure par rapport aux deux autres feuilles lors de la fabrication de la vitre (feuilletage).

En outre, cette(ces) partie(s) peut(peuvent) être située(s) en vis-à-vis des moyens permettant la mobilité de ladite vitre en translation par rapport à la porte dudit véhicule (c'est-à-dire le ou les porte-vitre) afin d'augmenter la tenue mécanique de la vitre à cet endroit.

Dans une variante spécifique, le chant de ladite feuille de verre intérieure est dans la continuité du chant de ladite feuille de verre extérieure dans une partie basse du vitrage ; par exemple, dans une partie basse qui reste à l'intérieur de ladite porte lorsque ledit vitrage est fermé.

En particulier, le chant de ladite feuille de verre intérieure peut être dans la continuité du chant de ladite feuille de verre extérieure le long du bord bas vitrage.

Le chant de ladite feuille de verre intérieure s'étend au-delà du chant de ladite feuille de verre extérieure en formant un décalage centripète compris, de préférence, entre 2,0 et 30,0 mm, voire entre 3,0 et 20,0 mm, ledit décalage étant en outre de préférence constant selon sa longueur afin qu'il soit plus discret, esthétiquement.

Dans une variante particulière, le chant de ladite feuille de verre intérieure s'étend au-delà du chant de ladite feuille de verre extérieure en formant un décalage centripète le long à la fois de la totalité d'une partie haute et le long d'une partie seulement d'un seul bord latéral, voire en formant un décalage centripète le long à la fois de la totalité d'une partie haute et le long d'une partie seulement de deux bords latéraux dudit vitrage.

Avantageusement, la présente invention permet de fabriquer des vitrages coulissant équipés de porte-vitres qui sont à la fois très résistant grâce à la structure feuilletée de la vitre dont la feuille intérieure est protégé par la couche de protection, qui sont en outre facile à guider en translation grâce au débord centripète de la feuille intérieure par rapport au reste de la vitre feuilletée et qui peuvent éventuellement être allégés.

La présente invention a été développée pour les vitrages incorporés dans des portières présentant des montants latéraux et un montant supérieur au niveau du vitrage lorsque celui-ci est remonté (fermé), mais elle peut également être utilisée pour des vitrages incorporés dans des portières ne présentant pas de montants latéraux et supérieur au niveau du vitrage lorsque celui-ci est remonté.

Avantageusement surtout, la présente invention permet de réaliser un vitrage qui, lorsqu'il est fermé, comporte une face extérieure qui est située dans le prolongement de la partie de carrosserie adjacente en périphérie (partie de la porte ou partie directe de la carrosserie si la porte n'a pas de montant en périphérie du vitrage) ; ce qui est connu sous la notion technique de « vitrage affleurant », ou « flush glazing » en anglais.

La présente invention sera mieux comprise à la lecture de la description détaillée ci-après d'exemples de réalisation non limitatifs et des figures ci-jointes :
- La figure 1 illustre une vue de face extérieure d'un vitrage avant de véhicule selon l'invention, muni de deux porte-vitre ;
- La figure 2 illustre une vue en coupe transversale verticale d'un porte-vitre de la figure 1 ;
- La figure 3 illustre une vue de profil d'un vitrage avant de véhicule muni de deux porte-vitre selon l'invention pendant l'opération de fixation d'un porte-vitre ;
- La figure 4 illustre une vue partielle en coupe transversale verticale du vitrage de la figure 1 entre les deux porte-vitre et sans ces porte-vitre, ce vitrage comportant un débord en partie haute et pas de débord en partie basse ; et
- La figure 5 illustre une vue partielle en coupe transversale verticale d'une variante de la figure 4, le vitrage comportant un débord en partie haute et en partie basse.

Il est précisé que les proportions entre les divers éléments représentés dans les figures ne sont pas rigoureusement respectées afin d'en faciliter la lecture.

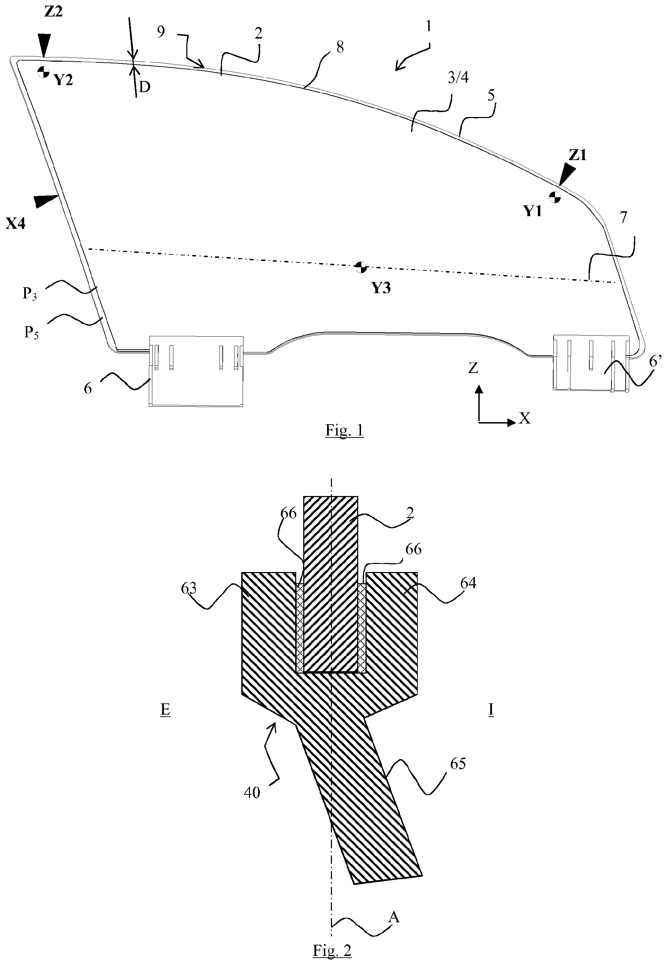

La figure 1 illustre un vitrage 1 latéral droit d'un véhicule, selon l'invention, considéré comme étant vu de l'extérieur de ce véhicule.

Il s'agit en particulier d'un vitrage latéral d'une porte d'un véhicule automobile qui est mobile entre translation par rapport à cette porte sensiblement selon la verticale entre une position ouverte dans laquelle le vitrage se situe en totalité ou en quasi-totalité à l'intérieur de la porte et une position fermée dans laquelle le vitrage ferme une baie de la porte.

Ce vitrage réalise ainsi en position fermée une séparation verticale entre un espace intérieure I qui est à l'intérieur du véhicule et un espace extérieur E qui est à l'extérieur du véhicule.

Les notions de « extérieur » et « intérieur » sont donc considérées dans le présent document respectivement par rapport à cet espace extérieur E et cet espace intérieur I.

Comme il s'agit d'un vitrage latéral, celui-ci s'étend pour l'essentiel selon l'axe généralement appelé « l'axe X » du véhicule, qui est l'axe longitudinal central d'avancé du véhicule équipé du vitrage selon l'invention en tant que vitrage latéral du côté droit du véhicule et qui correspond à l'axe horizontal dans le plan de la feuille en figure 1.

Dans le cadre du présent document, la notion de « centripète » et celle de « centrifuge » est à considérer dans le plan de la feuille en figure 1, exprimé par rapport au centre du vitrage, selon les axes X et Z ; le sens centrifuge est en direction de ce centre alors que le sens centripète s'éloigne de ce centre.

Dans le mode de réalisation de la figure 1, le vitrage 1 est d'un seul tenant.

Dans l'exemple de réalisation illustré, le vitrage 1 comporte une vitre 2 qui est bombée (c'est-à-dire non plate) et feuilletée. Toutefois, pour plus de simplicité, il est considéré dans les dessins des figures 1, 4 et 5 que la vitre 2 est plate.

La vitre 2 du vitrage 1 est une vitre feuilletée qui comporte, de l'extérieur vers l'intérieur, au moins, dans cet ordre : une feuille de verre extérieure 3, une feuille intercalaire de matière plastique 4 puis une feuille de verre intérieure 5 ; toutefois, il est possible qu'au moins une autre feuille soit intercalée entre la feuille de verre extérieure 3 et la feuille intercalaire de matière plastique 4 ou entre la feuille intercalaire de matière plastique 4 et feuille de verre intérieure 5.

La feuille de verre extérieure 3 présente une face extérieure 30 qui est orientée vers l'extérieur E, une face intercalaire 32 qui est orientée vers la feuille intercalaire de matière plastique 4, et un chant 31 périphérique situé entre ces deux faces.

La feuille de verre intérieure 5 présente une face intercalaire 50 qui est orientée vers la feuille intercalaire de matière plastique 4, une face intérieure 52 qui est orientée vers l'intérieur I et un chant 51 périphérique situé entre ces deux faces.

La feuille intercalaire de matière plastique 4 présente une face intercalaire extérieure 40 qui est orientée vers la face intercalaire 32 et qui est ici au contact de cette face intercalaire 32, une face intercalaire intérieure 42 qui est orientée vers la face intercalaire 50 et qui est ici au contact de cette face intercalaire 50, ainsi qu'un chant 41 périphérique qui est situé entre ces deux faces intercalaires 40, 42.

La feuille de verre extérieure 3 est par exemple une feuille de verre ayant subi une opération de bombage thermique avant la fabrication de la vitre 2 feuilletée et présentant une épaisseur e₃ comprise entre 1,20 et 4,50 mm, par exemple de 2,10 mm.

La feuille de matière plastique 4 intercalaire est par exemple une feuille en polyvinylbutyral (PVB) présentant une épaisseur e₄ comprise entre 0,50 et 1,50 mm, par exemple de 0,78 mm. Cette feuille de matière plastique 4 présente de préférence les mêmes dimensions de longueur selon l'axe X et de hauteur selon l'axe Z, que la feuille de verre extérieure 3.

La feuille de verre intérieure 5 est une feuille de verre ayant subi
- un bombage thermique et une trempe thermique et présentant une épaisseur e₅ comprise entre 0,40 et 2,10 mm, voire entre 0,40 et 2,00 mm, voire entre 0,40 et 1,80 mm, voire entre 0,40 et 1,60 mm, par exemple de 1,60 mm.
- une opération de trempe chimique et présentant une épaisseur e₅ comprise 0,40 et 2,10 mm, voire entre 0,40 et 2,00 mm, voire entre 0,40 et 1,80 mm, voire entre 0,40 et 1,60 mm, par exemple de 1,00 mm ; dans ce cas, de préférence, la feuille de verre intérieure 5 n'est pas bombée avant la fabrication de la vitre 2 feuilletée ; c'est ce feuilletage qui va lui donner sa forme bombée, en suivant la forme de la feuille de verre extérieure 3. Cela est rendu possible grâce à la faible épaisseur de la feuille de verre intérieure.

Dans le cas où la vitre 2 comporte une ou plusieurs autre(s) feuille(s) en plus des trois mentionnées précédemment, la feuille de verre intérieure 5 est la feuille de la vitre feuilletée qui est la plus à l'intérieure.

Le vitrage 1 comporte, outre la vitre 2, le long d'au moins une partie d'au moins un bord bas, des moyens pour permettre la mobilité de la vitre 2 en translation par rapport à une porte du véhicule. Ces moyens comprennent au moins un et de préférence au moins deux porte-vitre 6, 6' présentant par exemple en coupe transversale sensiblement une forme en h inversé.

La figure 2 illustre une vue de détail du porte-vitre 6 de la figure 1. Ce porte-vitre 6 présente ainsi :
- une première partie constituée de deux parois parallèles 63, 64 reliées à leur base et formant une rainure longitudinale, c'est-à-dire formant en coupe transversale une forme en U, et
- une deuxième partie constituée d'une queue 65 s'étendant à l'opposé des parois parallèles 63, 64 par rapport à la base reliant ces parois.

Dans la version illustrée, l'assemblage est opéré de manière à ce que lesdites parois parallèles 63, 64 de ladite forme en h enchâssent ladite vitre 2 dans sa partie inférieure, la queue 65 se trouvant alors sensiblement dans le prolongement de la vitre 2.

Cette forme en h du porte-vitre est particulièrement avantageuse car elle permet la transmission des efforts entre le porte-vitre et la vitre selon une grande surface correspondant à la somme des surfaces intérieures des parois parallèles 63, 64 ; toutefois, il est tout à possible d'utiliser une simple platine, cette platine présentant par exemple au moins deux parties : une première partie pour la coopération avec la vitre et une deuxième partie pour la coopération avec le mécanisme d'entraînement (monté/descente) de la vitre.

Sur la figure 2, la vitre 2 est bombé et les parois parallèles 63, 64 et la queue 65 sont planes ; toutefois il est possible que les parois parallèles 63, 64 et/ou la queue 65 soient bombées. La queue 65 s'étend environ à partir de la moitié de la base reliant les parois parallèles 63, 64, mais il est également possible de positionner la queue 65 dans le prolongement de l'une ou de l'autre des parois parallèles 63, 64.

Sur la figure 2 la queue 65 n'est pas parallèle aux parois 63, 64. L'axe A illustrant le plan moyen du vitrage 1 à son extrémité inférieure lorsque ce dernier est correctement positionné vis-à-vis du porte-vitre 6, la queue 65 est orientée d'un angle non nul vis-à-vis de l'axe A et qui est fonction du bombage de la vitre 2.

La queue 65 est destinée à être reliée à un système d'entraînement motorisé non illustré pour permettre la montée et la descente du vitrage 1 dans la portière du véhicule.

L'assemblage des porte-vitres 6, 6' à la vitre 2 est opéré sur un gabarit permettant le contrôle des tolérances sur l'ensemble porte-vitre 6 / vitre 2.

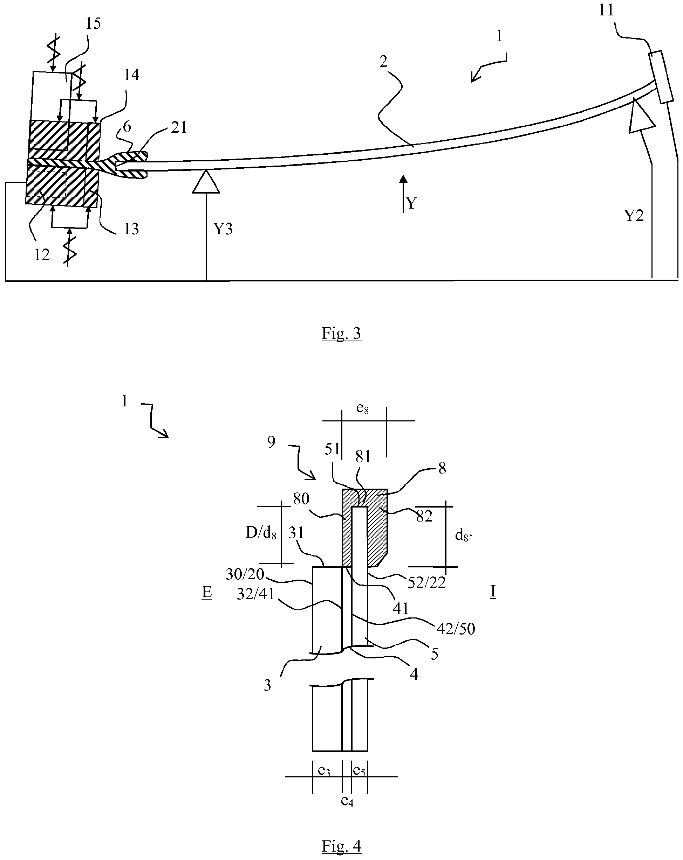

Avant le positionnement et la fixation des porte-vitre, la vitre 2 est d'abord correctement positionnée (« focalisée ») dans un gabarit de montage 11, visible en figure 3, présentant une pluralité de butées de positionnement, suivant l'iso statisme illustré sur la figure 1, en Z1, Z2, Y1, Y2, Y3 et X4.

Le point Y3 est, de préférence, positionné sur la ligne d'un joint lécheur 7 illustrant la position de ce joint de contact bas avec la portière lorsque le vitrage est fermé.

Une matrice 12, illustrée en pointillés, solidaire du référentiel de la vitre 2 accueille les queux 65 de chaque porte-vitre 6.

Des mors mobiles inférieur 13 et supérieur 14 viennent ensuite enserrer la queue 65.

Quelle que soit l'orientation des porte-vitre 6 dans la direction Y, les mords mobiles 13, 14 viennent emprisonner les porte-vitre 6 sans détériorer l'iso statisme décrit ci-dessus.

Le (ou les) porte-vitre 6, 6' est (ou sont) encollés(s) à l'aide d'une colle par exemple de polyuréthanne, puis « chaussé(s) » sur la vitre 2, c'est-à-dire qu'il(s) est (ou sont) positionné(s) de manière à ce que la vitre soit présente dans la forme en U, en butée ou non, en insérant entre lesdites parois parallèles 63, 64 et la vitre 2 des inserts 66 en matière plastique, comme par exemple du polypropylène.

Dans une variante, on propose de remplacer la phase de positionnement d'inserts 66 rapportés par une phase d'injection in-situ de matière adhésive destinée à former les inserts 66, en résine thermofusible thermoplastique, par exemple à base de polyamide.

L'injection des inserts lorsque la vitre et les porte-vitre sont correctement positionnés les uns par rapport aux autres garantit ainsi la position du porte-vitre, quel que soit le galbe de la vitre.

La résine thermofusible utilisée présente une limite d'élasticité d'environ 5,5 N/mm² et une résistance à la rupture de 11 N/mm², calculées selon la norme DIN 53455. Elle doit être utilisée à une température d'environ 220 °C et présente à cette température une viscosité de l'ordre de 5000 mPa.s, mesurée selon la norme ASTM D 3236.

Lors de la mise en œuvre de cette solution, il est également possible d'utiliser une colle supplémentaire pour fixer parfaitement l'insert aux parois parallèles et à la vitre.

Les inserts 66 rapportés ou fabriqués in-situ par injection servent ainsi à maintenir la vitre 2 par rapport aux parois parallèles 63, 64 vis-à-vis des efforts latéraux.

Les porte-vitre utilisés sont, de préférence, en alliage d'aluminium. A titre d'exemple, avec un alliage d'aluminium de nuance 6060 (AGS), une force de pressage verticale de 30 à 50 tonnes est suffisante, c'est-à-dire rapporté à la taille des porte-vitre, des efforts d'environ 150 GPa pour des porte-vitre en h de dimension hors-tout d'environ 40x30 mm et d'environ 450 GPa pour des porte-vitre en h de dimension hors-tout d'environ 60x60 mm.

L'élément vitré 2 présente une face extérieure 20 qui est réalisée par la face extérieure 30 de la feuille de verre extérieure 3, une face intérieure 22 qui est réalisée par la face intérieure 52 de la feuille de verre intérieure 5 et un chant 21 périphérique situé entre ces deux faces, correspondant au chant 31 périphérique de la feuille de verre extérieure 3, au chant 41 périphérique de la feuille de matière plastique 4 et au chant 51 périphérique de la feuille de verre intérieure 5.

Selon l'invention, le chant 51 de la feuille de verre intérieure 5 est situé au-delà, dans une direction centripète, du chant 41 de ladite feuille de matière plastique 4 et du chant 31 de la feuille de verre extérieure 3 sur une partie au moins de la longueur du chant 51 de la feuille de verre intérieure 5, c'est-à-dire le long d'une partie au moins de la longueur du chant 51 de la feuille de verre intérieure 5.

Ainsi, la feuille de verre intérieure 5 présente au moins une hauteur selon l'axe Z et/ou une longueur selon l'axe X qui est (sont) supérieure(s) à celle(s) de la feuille de verre extérieure 3.

De préférence, le chant 51 de la feuille de verre intérieure 5 est situé au-delà, dans une direction centripète, du chant 41 de la feuille de matière plastique 4 et du chant 31 de la feuille de verre extérieure 3 au moins en partie haute du vitrage.

Le chant 51 de ladite feuille de verre intérieure 5 est ainsi situé au-delà, dans une direction centripète, du chant 31 de ladite feuille de verre extérieure 3 (et du chant 41 de la feuille de matière plastique 4) en formant un décalage 9, ou débord, centripète. Ce décalage peut être compris entre 2,0 et 30,0 mm, voire entre 3,0 et 20,0 mm, comme par exemple ici de 2,85 mm ; Ce décalage 9 est de préférence constant selon sa longueur.

En figure 1, le joint lécheur 7 matérialise le haut du caisson de la portière à l'intérieur duquel le vitrage 1 coulisse, lorsque le vitrage est fermé. Dans cette position de vitrage fermé, tout la partie du vitrage qui est située sous ce joint lécheur 7 peut ne pas comporter de décalage : dans cette partie sous le joint lécheur 7, à l'intérieur du caisson de la portière lorsque le vitrage est fermé, il est possible que le chant 51 de la feuille de verre intérieure 5 sur une (ou plusieurs) partie(s) de sa longueur, voire sur la totalité de sa longueur, soit dans la continuité du chant 31 de la feuille de verre extérieure 3.

Il est possible par exemple que le chant 51 de la feuille de verre intérieure 5 soit dans la continuité du chant 31 de la feuille de verre extérieure 3 seulement là où sont les moyens pour permettre la mobilité de la vitre 2 en translation par rapport à une porte du véhicule.

Au-dessus du joint lécheur 7 la porte du véhicule peut comporter au moins une partie sans montant. Ainsi, il est possible que la porte :
- ne comporte pas de montant latéral avant et que ce soit la partie de carrosserie adjacente, autrement appelée « le pilier A » ou « A-pillar » en anglais, qui guide le vitrage, et/ou
- ne comporte pas de montant latéral arrière et que ce soit la partie de carrosserie adjacente, autrement appelée « le pilier B » ou « B-pillar » en anglais, qui guide le vitrage.

Le chant 51 de la feuille de verre intérieure 5 comporte de préférence une couche de protection 8 sur une partie au moins de la longueur du chant 51 de la feuille de verre intérieure 5 qui est situé au-delà, dans une direction centripète, du chant 41 de la feuille de matière plastique 4 et du chant 31 de la feuille de verre extérieure 3.

De préférence encore, cette couche de protection 8 est présente sur la totalité de la longueur du chant 51 de la feuille de verre intérieure 5 qui est situé au-delà du chant 41 de la feuille de matière plastique 4 et du chant 31 de la feuille de verre extérieure 3.

La couche de protection 8 s'étend en outre de préférence sur une distance d₈, d_{8'} contre une face extérieure 50 de la feuille de verre intérieure 5 et/ou respectivement contre une face intérieure 52 de la feuille de verre intérieure 5 ; cette distance est comprise de préférence entre 2,0 et 10,0 mm, voire entre 3,0 et 8,0 mm et est en outre de préférence constante en face extérieure 50 de la feuille de verre intérieure 5 et/ou en face intérieure 52 de la feuille de verre intérieure 5.

Ainsi, la couche de protection présente de préférence une face extérieure 80 qui est orientée vers l'extérieur E, une face intérieure 82 qui est orientée vers l'intérieur I et un chant 81 périphérique situé entre ces deux faces.

La face extérieure 80 de la couche de protection est de préférence sensiblement parallèle à la face extérieure 50 de la feuille de verre intérieure 5 dans la partie qu'elle couvre, la face intérieure 82 de la couche de protection est de préférence sensiblement parallèle à la face intérieure 52 de la feuille de verre intérieure 5 dans la partie qu'elle couvre et le chant 81 de la couche de protection est de préférence sensiblement parallèle au chant 51 de la feuille de verre intérieure 5 dans la partie qu'il couvre.

Ici, la couche de protection 8 s'étend sur une distance d₈ contre une face extérieure 50 de la feuille de verre intérieure 5 qui est identique à la hauteur du décalage D. Ainsi, la couche de protection vient au contact du chant 41 de la feuille de matière plastique et réalise également une protection pour ce chant.

Le but de la couche de protection 8 est à la fois de protéger le bord (c'est-à-dire au moins une partie du débord, voire tout le débord, voire plus que le débord) de la feuille de verre intérieure 5 afin d'empêcher sa dégradation et à la fois de protéger les usagers en raison du caractère potentiellement tranchant du bord de la feuille de verre intérieure, en particulier en cas de brèche affleurente au niveau d'une arête.

La couche de protection 8 est un vernis présentant une épaisseur comprise entre 0,1 et 3,0 mm, ou encore entre 0,2 et 2,0 mm, par exemple de 0,5 mm ; elle peut être aussi à la place ou en outre une pièce en matière plastique ou en métal ou alliage métallique. Elle peut être préfabriquée puis coincée ou collée à la feuille de verre extérieure ou fabriquée in-situ lorsqu'elle est en matière plastique, en utilisant par exemple la technologie de l'extrusion in-situ ou de l'encapsulation entre deux parties de moules refermées sur-elles-mêmes ou encore une technologie hybride d'extrusion guidée entre deux parties de moule non complètement refermées sur-elles-mêmes.

La couche de protection est ici un profilé en matière plastique présentant une épaisseur totale e₈ égale au moins au double de l'épaisseur e₅ de la feuille de verre intérieure 5.

La couche de protection est fixée à la vitre 2 avant ou après la fixation des porte-vitres 6, 6' mais en tout cas avant la fixation du vitrage 1 à la porte du véhicule. Cette fixation est de préférence définitive dans le sens où la couche de protection ne peut alors pas être retirée sans endommager le vitrage.

La couche de protection peut aussi participer à l'esthétique du vitrage en présentant une couleur appropriée (identique) au regard de la couleur de la carrosserie du véhicule ou en présentant une apparence chromée.

Dans le mode de réalisation illustré en figure 1, le chant 51 de ladite feuille de verre intérieure 5 est situé au-delà à la fois du chant 41 de la feuille de matière plastique 4 et à la fois du chant 31 de la feuille de verre extérieure 3 sur une partie seulement de la longueur du chant 51 de la feuille de verre intérieure 5. En l'occurrence, le débord est présent le long des bords latéraux et du bord haut de la vitre, mais n'est pas présent le long du bord bas de la vitre.

Ainsi, comme visible en figure 4, ces trois chants 31, 41, 51 sont dans la continuité l'un de l'autre selon l'axe Y en partie basse de la vitre, mais ne sont pas dans la continuité l'un de l'autre selon l'axe Y en partie haute de la vitre : le chant 51 de la feuille de verre intérieure 5 est décalé en direction centripète, c'est-à-dire :
- selon l'axe Z au moins le long du bord haut de la vitre
- et de préférence en outre selon l'axe X au moins le long du bord latéral de la vitre, voire de préférence encore le long des deux bords latéraux de la vitre.

Par exemple, le chant 51 de la feuille de verre intérieure 5 peut être décalé en direction centripète, le long du bord haut de la vitre et le long du bord latéral de la vitre qui est vers l'arrière du véhicule, à droite sur la figure 1, autrement appelé « le pilier B » ou « B-pillar » en anglais.

Chaque feuille 3, 4, 5 présente un pourtour P₃, P₄, P₅ périphérique : le pourtour P₅ de la feuille de verre intérieure 5 s'étend au-delà du pourtour P₄ de la feuille de matière plastique 4 et du pourtour P₃ de la feuille de verre extérieure 3 sur une partie au moins de la longueur du pourtour P₅ de la feuille de verre intérieure 5.

Le pourtour P₅ de la feuille de verre intérieure 5 n'est pas dans la continuité du pourtour P₃ de la feuille de verre extérieure 3 dans une partie haute du vitrage qui est présent à l'extérieur des parois de la porte lorsque le vitrage est fermé : le débord est ainsi présent le long de la totalité de la périphérie de la vitre qui est visible de l'extérieur lorsque le vitrage est fermé.

Le pourtour P₅ de la feuille de verre intérieure 5 est dans la continuité latérale du pourtour P₃ de la feuille de verre extérieure 3 uniquement dans une partie basse du vitrage : dans la partie du vitrage qui reste à l'intérieur de ladite porte lorsque le vitrage est fermé, afin de participer au renfort de la vitre à cet endroit en vue d'augmenter la fiabilité de l'attache des porte-vitres à la vitre.

Ce pourtour P₅ de la feuille de verre intérieure 5 qui est décalé en direction centripète par rapport aux pourtours P₃ de la feuille de verre extérieure 3 et P₄ de la feuille de matière plastique 4 rend possible d'utiliser ce pourtour P5 pour guider le vitrage 1 dans des profilés correspondant situés en vis-à-vis dans la baie de la porte lorsque la porte comporte des montants ou dans la baie de la carrosserie qui accueille la porte par rapport à laquelle le vitrage peut coulisser lorsque la porte comporte des montants partiels de vitrage ou ne comporte pas de montant de vitrage.

En particulier, ce pourtour peut venir s'encastrer dans un profilé en U prévu en partie haute de la porte ou de la baie lorsque le vitrage est complètement fermé.

Dans une variante, le chant 51 de la feuille de verre intérieure 5 s'étend au-delà du chant 31 de la feuille de verre extérieure 3 en formant le décalage 9, ou débord, centripète le long à la fois de la totalité d'une partie haute et le long de la totalité d'un bord supérieur du vitrage et le long d'une partie seulement d'un seul bord latéral, voire en formant un décalage 9, ou débord, centripète le long à la fois de la totalité d'une partie haute et le long d'une partie seulement de deux bords latéraux dudit vitrage.

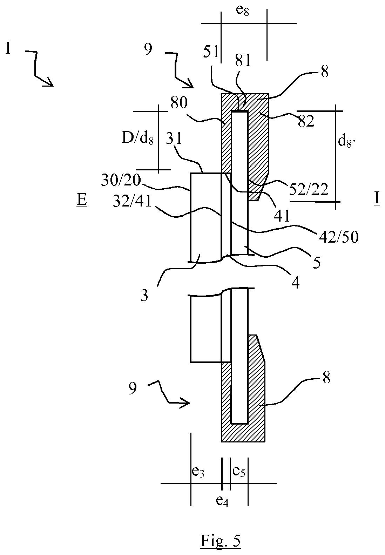

Dans un mode de réalisation illustré en figure 5, le chant de la feuille de verre intérieure est situé au-delà du chant de la feuille de matière plastique et du chant de la feuille de verre extérieure sur la totalité de la longueur du chant de la feuille de verre intérieure.

Ainsi, ces trois chants ne sont pas dans la continuité l'un de l'autre, ni selon l'axe Y en partie basse de la vitre, ni selon l'axe Y en partie haute de la vitre, ni selon l'axe Y sur les côtés.

Dans ce mode de réalisation, le débord centripète est périphérique : il est présent le long de la totalité de la périphérie de la vitre ; la distance D est préférence constante tout autour de la vitre 2.

Dans le mode de réalisation illustré en figure 5, la couche de protection 8 est également complètement périphérique : elle est présente le long de la totalité du chant 51 de la feuille de verre intérieure 5 ; il est possible toutefois d'interrompre la couche de protection 8 dans la zone, ou dans chaque zone, ou sont situés les moyens pour permettre la mobilité de la vitre 2 en translation par rapport à la porte du véhicule.

Par ailleurs, dans le mode de réalisation illustré en figure 5, la couche de protection 8 s'étend sur une distance d_{8'} contre la face intérieure 52 de la feuille de verre intérieure 5 qui est supérieure à la distance D de débord du chant 51 de la feuille de verre intérieure 5 par rapport au chant 41 de la feuille de matière plastique 4 et au chant 31 de la feuille de verre extérieure 3. Cette distance d_{8'} peut être comprise entre 3,0 et 40,0 mm, voire entre 4,0 et 30,0 mm, et peut être par exemple de 15,0 mm.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Vitrage (1) de véhicule, comportant une vitre (2) ainsi que des moyens pour permettre la mobilité de ladite vitre (2) en translation par rapport à une porte dudit véhicule, ladite vitre (2) étant bombé et feuilleté et comprenant au moins une feuille de verre extérieure (3), une feuille de verre intérieure (5), ainsi qu'une feuille de matière plastique (4) située entre ladite feuille de verre extérieure (3) et ladite feuille de verre intérieure (5), chaque feuille (3, 4, 5) présentant un chant (31, 41, 51) périphérique, **caractérisé en ce que** le chant (51) de ladite feuille de verre intérieure (5) est situé au-delà du chant (41) de ladite feuille de matière plastique (4) et du chant (31) de ladite feuille de verre extérieure (3) sur une partie au moins de la longueur du chant (51) de ladite feuille de verre intérieure (5) **et en ce que** ladite feuille de verre intérieure (5) est une feuille de verre présentant une épaisseur (es) comprise entre 0,40 et 2,10 mm et le chant (51) de ladite feuille de verre intérieure (5) comporte une couche de protection (8) sur une partie au moins de la longueur du chant (51) de ladite feuille de verre intérieure (5) qui est situé au-delà du chant (41) de ladite feuille de matière plastique (4) et du chant (31) de ladite feuille de verre extérieure (3), ladite couche de protection (8) étant un vernis présentant une épaisseur comprise entre 0,1 et 3,0 mm.

2. Vitrage (1) selon la revendication 1, **caractérisé en ce que** le chant (51) de ladite feuille de verre intérieure (5) comporte une couche de protection (8) sur la totalité de la longueur du chant (51) de ladite feuille de verre intérieure (5) qui est situé au-delà du chant (41) de ladite feuille de matière plastique (4) et du chant (31) de ladite feuille de verre extérieure (3).

3. Vitrage (1) selon la revendication 1 ou 2, **caractérisé en ce que** ladite feuille de verre intérieure (5) présente une épaisseur (es) comprise entre 0,40 et 2,00 mm, voire entre 0,40 et 1,80 mm, voire entre 0,40 et 1,60 mm.

4. Vitrage (1) selon l'une quelconque des revendications 1 à 3, **caractérisé en ce que** la couche de protection (8) s'étend sur une distance (d₈, d_{8'}) contre une face extérieure (50) de ladite feuille de verre intérieure (5) et/ou contre une face intérieure (52) de ladite feuille de verre intérieure (5), ladite distance étant comprise entre 2,0 et 30,0 mm, voire entre 3,0 et 20,0 mm et étant en outre de préférence constante en face extérieure (50) de ladite feuille de verre intérieure (5) et/ou en face intérieure (52) de ladite feuille de verre intérieure (5).

5. Vitrage (1) selon l'une quelconque des revendications 1 à 4, **caractérisé en ce qu'**il comporte une couche de protection (8) s'étend sur une distance (d_{8'}) contre une face intérieure (52) de ladite feuille de verre intérieure (5) qui est supérieure à une distance (D) de débord du chant (51) de ladite feuille de verre intérieure (5) par rapport au chant (41) de ladite feuille de matière plastique (4) et au chant (31) de ladite feuille de verre extérieure (3).

6. Vitrage (1) selon l'une quelconque des revendications 1 à 5, **caractérisé en ce que** le chant (51) de ladite feuille de verre intérieure (5) s'étend au-delà du chant (41) de ladite feuille de matière plastique (4) et du chant (31) de ladite feuille de verre extérieure (3) au moins en partie haute dudit vitrage (1).

7. Vitrage (1) selon l'une quelconque des revendications 1 à 6, **caractérisé en ce que** le chant (51) de ladite feuille de verre intérieure (5) s'étend au-delà du chant (41) de ladite feuille de matière plastique (4) et du chant (31) de ladite feuille de verre extérieure (3) sur une partie seulement de la longueur du chant (51) de ladite feuille de verre intérieure (5).

8. Vitrage (1) selon l'une quelconque des revendications 1 à 7, **caractérisé en ce que** le chant (51) de ladite feuille de verre intérieure (5) est dans la continuité du chant (31) de ladite feuille de verre extérieure (3) dans une partie basse du vitrage.

9. Vitrage (1) selon l'une quelconque des revendications 1 à 8, **caractérisé en ce que** le chant (51) de ladite feuille de verre intérieure (5) s'étend au-delà du chant (31) de ladite feuille de verre extérieure (3) en formant un décalage (9) centripète compris entre 2,0 et 30,0 mm, voire entre 3,0 et 20,0 mm, ledit décalage (9) étant de préférence constant selon sa longueur.

10. Vitrage (1) selon l'une quelconque des revendications 1 à 9, **caractérisé en ce que** le chant (51) de ladite feuille de verre intérieure (5) s'étend au-delà du chant (31) de ladite feuille de verre extérieure (3) en formant un décalage (9) centripète le long à la fois de la totalité d'une partie haute et le long d'une partie seulement d'un seul bord latéral, voire en formant un décalage (9) centripète le long à la fois de la totalité d'une partie haute et le long d'une partie seulement de deux bords latéraux dudit vitrage.

## Patentansprüche

1. Fahrzeugverglasung (1), umfassend eine Scheibe (2) sowie Mittel zum Ermöglichen der translatorischen Beweglichkeit der Scheibe (2) in Bezug auf eine Tür des Fahrzeugs, wobei die Scheibe (2) gewölbt und laminiert ist und mindestens eine äußere Glasplatte (3), eine innere Glasplatte (5) sowie eine Kunststoffplatte (4) umfasst, die zwischen der äußeren Glasplatte (3) und der inneren Glasplatte (5) angeordnet ist, wobei jede Platte (3, 4, 5) eine umlaufende Kante (31, 41, 51) aufweist, **dadurch gekennzeichnet, dass** die Kante (51) der inneren Glasplatte (5) über die Kante (41) der Kunststoffplatte (4) und die Kante (31) der äußeren Glasplatte (3) hinaus auf einem Teil von mindestens der Länge der Kante (51) der inneren Glasplatte (5) angeordnet ist, **und dadurch, dass** die innere Glasplatte (5) eine Glasplatte ist, die eine Dicke (es) zwischen 0,40 und 2,10 mm aufweist, und die Kante (51) der inneren Glasplatte (5) eine Schutzschicht (8) auf einem Teil von mindestens der Länge der Kante (51) der inneren Glasplatte (5) umfasst, die über die Kante (41) der Kunststoffplatte (4) und die Kante (31) der äußeren Glasplatte (3) hinaus angeordnet ist, wobei die Schutzschicht (8) ein Lack ist, der eine Dicke zwischen 0,1 und 3,0 mm aufweist.

2. Verglasung (1) nach Anspruch 1, **dadurch gekennzeichnet, dass** die Kante (51) der inneren Glasplatte (5) eine Schutzschicht (8) entlang der Gesamtheit der Länge der Kante (51) der inneren Glasplatte (5) umfasst, die über die Kante (41) der Kunststoffplatte (4) und die Kante (31) der äußeren Glasplatte (3) hinaus angeordnet ist.

3. Verglasung (1) nach Anspruch 1 oder 2, **dadurch gekennzeichnet, dass** die innere Glasplatte (5) eine Dicke (es) zwischen 0,40 und 2,00 mm oder zwischen 0,40 und 1,80 mm oder zwischen 0,40 und 1,60 mm aufweist.

4. Verglasung (1) nach einem der Ansprüche 1 bis 3, **dadurch gekennzeichnet, dass** sich die Schutzschicht (8) über einen Abstand (d₈, d_{8'}) zu einer Außenfläche (50) der inneren Glasplatte (5) und/oder zu einer Innenfläche (52) der inneren Glasplatte (5) erstreckt, wobei der Abstand zwischen 2,0 und 30,0 mm oder zwischen 3,0 und 20,0 mm beträgt und ferner an der Außenfläche (50) der inneren Glasplatte (5) und/oder an der Innenfläche (52) der inneren Glasplatte (5) vorzugsweise konstant ist.

5. Verglasung (1) nach einem der Ansprüche 1 bis 4, **dadurch gekennzeichnet, dass** sie eine Schutzschicht (8) umfasst, die sich über einen Abstand (d_{8'}) zu einer Innenfläche (52) der inneren Glasplatte (5) erstreckt, der größer ist als ein Abstand (D) des Überhangs der Kante (51) der inneren Glasplatte (5) in Bezug auf die Kante (41) der Kunststoffplatte (4) und die Kante (31) der äußeren Glasplatte (3).

6. Verglasung (1) nach einem der Ansprüche 1 bis 5, **dadurch gekennzeichnet, dass** sich die Kante (51) der inneren Glasplatte (5) über die Kante (41) der Kunststoffplatte (4) und die Kante (31) der äußeren Glasplatte (3) hinaus erstreckt, zumindest im oberen Teil der Verglasung (1).

7. Verglasung (1) nach einem der Ansprüche 1 bis 6, **dadurch gekennzeichnet, dass** sich die Kante (51) der inneren Glasplatte (5) über die Kante (41) der Kunststoffplatte (4) und die Kante (31) der äußeren Glasplatte (3) hinaus nur über einen Teil der Länge der Kante (51) der inneren Glasplatte (5) erstreckt.

8. Verglasung (1) nach einem der Ansprüche 1 bis 7, **dadurch gekennzeichnet, dass** die Kante (51) der inneren Glasplatte (5) in einem unteren Teil der Verglasung in Kontinuität mit der Kante (31) der äußeren Glasscheibe (3) angeordnet ist.

9. Verglasung (1) nach einem der Ansprüche 1 bis 8, **dadurch gekennzeichnet, dass** sich die Kante (51) der inneren Glasplatte (5) über die Kante (31) der äußeren Glasplatte (3) hinaus erstreckt und einen zentripetalen Versatz (9) zwischen 2,0 und 30,0 mm oder zwischen 3,0 und 20,0 mm bildet, wobei der Versatz (9) vorzugsweise der Länge nach konstant ist.

10. Verglasung (1) nach einem der Ansprüche 1 bis 9, **dadurch gekennzeichnet, dass** sich die Kante (51) der inneren Glasplatte (5) über die Kante (31) der äußeren Glasplatte (3) hinaus erstreckt durch Bilden eines zentripetalen Versatzes (9) sowohl entlang der Gesamtheit des oberen Teils als auch entlang nur eines Teils eines einzigen Seitenrandes oder durch Bilden eines zentripetalen Versatzes (9) sowohl entlang der Gesamtheit des oberen Teils als auch entlang nur eines Teils von zwei Seitenrändern der Verglasung.

## Claims

1. An automotive glazing unit (1) including a glazing (2) and means for allowing said glazing (2) to be moved translationally with respect to a door of said vehicle, said glazing (2) being curved and laminated and comprising at least an exterior glass sheet (3), an interior glass sheet (5) and a plastic sheet (4) located between said exterior glass sheet (3) and said interior glass sheet (5), each sheet (3, 4, 5) having a peripheral edge face (31, 41, 51), **characterized in that** the edge face (51) of said interior glass sheet (5) is located beyond the edge face (41) of said plastic sheet (4) and beyond the edge face (31) of said exterior glass sheet (3) over at least one portion of the length of the edge face (51) of said interior glass sheet (5) **and in that** said interior glass sheet (5) has a thickness (es) comprised between 0.40 and 2.10 mm and the edge face (51) of said interior glass sheet (5) includes a protective layer (8) on at least one portion of the length of that edge face (51) of said interior glass sheet (5) which is located beyond the edge face (41) of said plastic sheet (4) and beyond the edge face (31) of said exterior glass sheet (3), said protective layer (8) being a varnish having a thickness of about 0.1 to 3.0 mm.

2. The glazing unit (1) as claimed in claim 1, **characterized in that** the edge face (51) of said interior glass sheet (5) includes a protective layer (8) over the entirety of the length of that edge face (51) of said interior glass sheet (5) which is located beyond the edge face (41) of said plastic sheet (4) and beyond the edge face (31) of said exterior glass sheet (3).

3. The glazing unit (1) as claimed in claim 1 or 2, **characterized in that** said interior glass sheet (5) has a thickness (es) comprised between 0.40 and 2.00 mm, or even between 0.40 and 1.80 mm, or even between 0.40 and 1.60 mm.

4. The glazing unit (1) as claimed in any one of claims 1 to 3, **characterized in that** the protective layer (8) extends over a distance (d₈, d_{8'}) against an exterior face (50) of said interior glass sheet (5) and/or against an interior face (52) of said interior glass sheet (5), said distance being comprised between 2.0 and 30.0 mm, or even between 3.0 and 20.0 mm and furthermore preferably remaining constant on the exterior face (50) of said interior glass sheet (5) and/or the interior face (52) of said interior glass sheet (5).

5. The glazing unit (1) as claimed in any one of claims 1 to 4, **characterized in that** it includes a protective layer (8) extends over a distance (d_{8'}) against an interior face (52) of said interior glass sheet (5) that is larger than a projection distance (D) of the edge face (51) of said interior glass sheet (5) with respect to the edge face (41) of said plastic sheet (4) and to the edge face (31) of said exterior glass sheet (3).

6. The glazing unit (1) as claimed in any one of claims 1 to 5, **characterized in that** the edge face (51) of said interior glass sheet (5) lies beyond the edge face (41) of said plastic sheet (4) and beyond the edge face (31) of said exterior glass sheet (3) at least in the top portion of said glazing unit (1).

7. The glazing unit (1) as claimed in any one of claims 1 to 6, **characterized in that** the edge face (51) of said interior glass sheet (5) lies beyond the edge face (41) of said plastic sheet (4) and beyond the edge face (31) of said exterior glass sheet (3) over one portion only of the length of the edge face (51) of said interior glass sheet (5).

8. The glazing unit (1) as claimed in any one of claims 1 to 7, **characterized in that** the edge face (51) of said interior glass sheet (5) is aligned with the edge face (31) of said exterior glass sheet (3) in a bottom portion of the glazing.

9. The glazing unit (1) as claimed in any one of claims 1 to 8, **characterized in that** the edge face (51) of said interior glass sheet (5) lies beyond the edge face (31) of said exterior glass sheet (3) so that a centripetal offset (9) of size comprised between 2.0 and 30.0 mm, or even between 3.0 and 20.0 mm, is formed, said offset (9) preferably being constant along its length.

10. The glazing unit (1) as claimed in any one of claims 1 to 9, **characterized in that** the edge face (51) of said interior glass sheet (5) lies beyond the edge face (31) of said exterior glass sheet (3) so that a centripetal offset (9) is formed along both the entirety of a top portion and along one portion only of a single lateral edge, or indeed so that a centripetal offset (9) is formed along both the entirety of a top portion and along one portion only of two lateral edges of said glazing unit.
